# EUROPÄISCHE PATENTANMELDUNG

(11) **EP 2 184 660 A2**
(43) Veröffentlichungstag der Anmeldung: **12.05.2010**
(21) Anmeldenummer: 09450200.2
(22) Anmeldetag: 21.10.2009
(51) Int. Cl.: G05D 11/13, B01F 15/04, B65D 83/68

(54) **Einrichtung zum dosierten Ausbringen von zwei Komponenten**

(30) Priorität: 06.11.2008 AT 17272008
(71) Anmelder: RATHOR AG, 9050 Appenzell (CH)
(72) Erfinder: Vujanic, Aleksandar, 9014 St. Gallen (CH); Kellner, Torsten, 9050 Appenzell (CH)
(74) Vertreter: Haffner und Keschmann Patentanwälte OG

(57) **Zusammenfassung**

Bei einer Einrichtung zum dosierten Ausbringen von zwei Komponenten zur Verbindung mit einer Kartusche bzw. Dose, in welcher wenigstens eine Komponente unter Druck vorrätig ist, sind wenigstens ein Eingangsventil (1) und eine Ausströmöffnung (2) mit einem Durchlaufkanal (3) für die unter Druck bereitgestellte erste Komponente und eine weitere Ausströmöffnung (7) für die zweite Komponente vorgesehen und es sind ein Mengendetektor (4) für die im Durchlaufkanal (3) fließende erste Komponente und eine Dosiereinrichtung für die Dosierung der zweiten Komponente angeordnet, sodass die Dosierung der zweiten Komponenten in Abhängigkeit von der gemessenen Menge der ersten Komponente vorgenommen wird. (Fig. 1)

## Beschreibung

Die Erfindung betrifft eine Einrichtung zum dosierten Ausbringen von zwei Komponenten zur Verbindung mit einer Kartusche bzw. Dose, in welcher wenigstens eine Komponente unter Druck vorrätig ist.

In derartigen Druckdosen werden beispielsweise Komponenten zur Herstellung von Montageschäumen vorrätig gehalten. Prinzipiell unterscheidet man zwischen Ein-Komponenten-Montageschäumen und Zwei-Komponenten-Montageschäumen. Bei Ein-Komponenten-Montageschäumen wird der Montageschaum in Aerosoldosen, bei großen Mengen auch in Druckbehältern aufbewahrt. Der Schaum wird direkt aus der Dose aufgetragen. Die Verarbeitung erfolgt mit einem Handdispenser oder einem Dosiergerät. Dabei reagiert der Schaum mit der Luftfeuchtigkeit bzw. dem Wasser im Untergrund, wodurch der Schaum aushärtet. Bei Zwei-Komponenten-Montageschäumen werden die zwei Komponenten gemischt, bevor der Schaum aufgetragen wird. Die Vermischung geschieht in einer Druckflasche, sodass der gesamte Inhalt der Flasche unmittelbar verarbeitet werden muss. Es sind aber auch bereits Kartuschen bekannt geworden, in denen die beiden Komponenten getrennt gelagert werden und direkt beim Auftrag in einem Mischrohr im jeweiligen Verhältnis gemischt werden. Der Zwei-Komponenten-Montageschaum härtet unabhängig von der Luftfeuchtigkeit gleichmäßig aus, deshalb ist beispielsweise auch die Verwendung in geschlossenen Hohlräumen möglich.

Montageschäume finden beispielsweise bei der Fenstermontage und der Türzargenmontage Anwendung. Montageschäume sind im ausgehärteten Zustand beständig gegen Wasser, Öl, Benzin, Laugen und diverse Lösungsmittel. Der Montageschaum ist unverrottbar und fäulnisresistent. Bei der Montage von Türrahmen und beim Einbau von Fenstern wird sehr häufig Polyurethanschaum (PU-Schaum) verwendet. Die vorliegende Erfindung bezieht sich aber nicht nur auf Zwei-Komponenten-Montageschäume, sondern kann auch für andere Zwei-Komponenten-Formulierungen eingesetzt werden, etwa in der Oberflächentechnik oder für Klebstoffe. Zwei-Komponenten-Polyurethanschaum-Systeme bestehen in der Regel aus einem Prepolymer, einem Vernetzungspartner und einem Treibgas. In solchen Systemen sind Prepolymer und Vernetzungskomponente getrennt voneinander enthalten, beispielsweise in dem die Vernetzungskomponente in einer Integralhülse im Gasprepolymer enthaltenden Aerosolbehälter untergebracht ist. Der in der Integralhülse enthaltene Vernetzungspartner reagiert nach Auslösung mittels Zündkopf mit dem Polyisozyanatüberschuss des Prepolymers, worauf sich ein ohne Zugabe von Wasser oder Luftfeuchtigkeit aushärtendes Schaumsystem ergibt. Es resultiert ein schnellhärtendes Harzsystem, welches nach der Gelierungsphase einen nur noch geringen Expansionsdruck aufweist. Ein Zwei-Komponenten-Polyurethanschaum-System ist beispielsweise aus der DE 40 38 400 A1 bekannt geworden.

Die Vernetzungskomponente in der Integralhülse dient dazu, das Aushärten und die Qualität des Produkts zu beeinflussen, in der Regel die Aushärtung zu beschleunigen. Diese Komponente wird kurz vor dem Ausbringen des Doseninhaltes durch Öffnen des Integralbehälters in die Druckdose eingebracht und durch Schütteln darin eingemischt. Die fertige Mischung muss dann innerhalb einer definierten Zeit ausgebracht werden, um das Aushärten des Prepolymers in der Dose zu verhindern. Weiters besteht die Gefahr einer Explosion, wenn die Mischung nicht rechtzeitig ausgebracht wird, da aufgrund der exothermen Reaktion die Temperatur und damit der Dosendruck sehr stark anwachsen.

Bei Zwei-Komponenten-Systemen besteht somit prinzipiell das Problem, dass eine in der Dose verbleibende Restmenge nach dem Vermischen der beiden Komponenten für eine spätere Anwendung nicht mehr brauchbar ist. Diese Restmenge kann daher nur mehr entsorgt werden. Ein weiteres Problem bei Zwei-Komponenten-Systemen liegt darin, dass das Mischungsverhältnis der beiden Komponenten nicht ohne weiteres eingestellt werden kann. Das Mischungsverhältnis wird vielmehr schon während der Produktion mit der Menge der in die Dose abgefüllten Komponenten festgelegt.

Die vorliegende Erfindung zielt daher darauf ab, eine Einrichtung zum dosierten Ausbringen von zwei Komponenten zu schaffen, welche auf einer Kartusche bzw. Dose, in welcher wenigstens eine Komponente unter Druck vorrätig ist, aufgesetzt bzw. mit dieser verbunden werden kann, wobei jeweils nur die aus der Kartusche ausgebrachte Menge der wenigstens einen Komponente mit der zweiten Komponente vermischt werden soll, sodass eine in der Kartusche bzw. Dose verbleibende Restmenge für spätere Anwendungen aufgehoben werden kann. Die Erfindung zielt weiters darauf ab, die Möglichkeit einer Einstellung des Mischungsverhältnisses der beiden Komponenten zu bieten.

Zur Lösung dieser Aufgabe ist die Einrichtung der eingangs genannten Art im Wesentlichen **dadurch gekennzeichnet, dass** wenigstens ein Eingangsventil und eine Ausströmöffnung mit einem Durchlaufkanal für die unter Druck bereitgestellte erste Komponente und eine weitere Ausströmöffnung für die zweite Komponente vorgesehen sind und dass ein Mengendetektor für die im Durchlaufkanal fließende erste Komponente und eine Dosiereinrichtung für die Dosierung der zweiten Komponente angeordnet sind, sodass die Dosierung der zweiten Komponenten in Abhängigkeit von der gemessenen Menge der ersten Komponente vorgenommen wird. Die erfindungsgemäße Einrichtung weist somit zwei gesonderte Ausströmöffnungen für die Ausbringung der beiden Komponenten auf, wobei die Ausströmöffnung für die erste Komponente über ein Eingangsventil und einen Durchlaufkanal mit der Dose verbindbar ist. Für die zweite Komponente ist eine gesonderte Ausströmöffnung vorgesehen, sodass die beiden Komponenten jeweils gesondert einer Mischeinrichtung zugeführt werden können. Dadurch, dass ein Mengendetektor für die im Durchlaufkanal fließende erste Komponente vorgesehen ist, wird die Möglichkeit geschaffen, eine mengenabhängige Zudosierung der zweiten Komponente vorzunehmen. Zu diesem Zweck ist erfindungsgemäß eine Dosiereinrichtung für die Dosierung der zweiten Komponente vorgesehen, sodass die Dosierung der zweiten Komponente in Abhängigkeit von der gemessenen Menge der ersten Komponente vorgenommen wird. Die Dosiereinrichtung erlaubt hierbei eine gesteuerte Zudosierung der zweiten Komponente, sodass ein vorgegebenes Mischungsverhältnis exakt eingehalten werden kann.

Gemäß einer bevorzugten Weiterbildung kann eine Regelungseinrichtung zur Regelung des Mischungsverhältnisses der beiden Komponenten vorgesehen sein. Auf diese Weise kann die zudosierte Menge der zweiten Komponente den jeweiligen Bedürfnissen angepasst werden, wodurch beispielsweise eine Einstellung des Härtungs-, Ausschäumungs- oder Klebeverhaltens eines Zwei-Komponenten-Schaums vorgenommen werden kann.

Während die erste Komponente der erfindungsgemäßen Einrichtung aus einer Kartusche oder Dose zugeführt wird, kann die Bereitstellung der zweiten Komponente auf unterschiedliche Arten vorgenommen werden. Gemäß einer ersten bevorzugten Ausführungsform ist vorgesehen, dass die Einrichtung eine Vorratskammer für die zweite Komponente umfasst, die bevorzugt über eine Pumpe mit der weiteren Ausströmöffnung verbunden ist. Die zweite Komponente wird somit unmittelbar in der erfindungsgemäßen Einrichtung vorrätig gehalten, wobei die auszubringende Menge von der Dosiereinrichtung eingestellt wird. Eine besonders einfache Einstellung der auszubringenden Menge erfolgt gemäß einer bevorzugten Weiterbildung, wenn die zweite Komponente mit einer Pumpe ausgebracht wird.

Alternativ zur Vorrätighaltung der zweiten Komponente in einer Vorratskammer der Einrichtung kann die zweite Komponente aus einer weiteren unter Druck stehenden Vorratsdose zugeführt werden. In diesem Zusammenhang sieht eine bevorzugte Weiterbildung vor, dass ein weiteres Eingangsventil, das entsprechend geregelt sein kann, zum Zuführen der zweiten Komponente aus einer unter Druck stehenden Vorratsdose vorgesehen ist.

Zur Vermischung der beiden Komponenten ist gemäß einer bevorzugten Weiterbildung ein Mischkanal vorgesehen, in welchen die Ausströmöffnungen oder an die Ausströmöffnungen angeschlossene Leitungen münden. Dabei können die beiden Komponenten in einem nachgeschalteten Statikmischersystem miteinander vermischt werden oder es kann bei einer Pistolenanwendung vorgesehen sein, dass die eine Komponente durch die Pistole fließt und die zweite Komponente mittels eines Zusatzrohres außerhalb der Pistole bis zur Pistolenspitze geführt wird und erst nach Austritt der ersten Komponente aus der Pistole der ersten Komponente zugemischt wird.

Der erfindungsgemäß vorgesehene Mengendetektor kann entweder als mechanischer oder als elektrischer Sensor ausgebildet sein. Bei der mechanischen Ausbildung ist bevorzugt vorgesehen, dass der Mengendetektor einen vom Fluss der ersten Komponente mechanisch angetriebenen Bauteil aufweist. Die Kopplung des Mengendetektors mit der Dosiereinheit erfolgt in diesem Fall bevorzugt dadurch, dass der angetriebene Bauteil des Mengendetektors und die Dosiereinrichtung mechanisch miteinander gekoppelt sind. Die Kopplung kann beispielsweise durch Eingriff von Zahnrädern, durch einen Riemenantrieb oder dgl. vorgenommen werden. Beispielsweise kann vorgesehen sein, dass ein zu Rotation angetriebener Bauteil des Mengendetektors direkt oder unter Zwischenschaltung eines Getriebes eine Pumpe der Dosiereinrichtung antreibt. Dies stellt eine äußerst zuverlässige Einhaltung eines vorgegebenen Mischungsverhältnisses der beiden Komponenten dar.

Alternativ kann die Kopplung des Mengendetektors und der Dosiereinrichtung elektrisch erfolgen. Die Ausbildung ist hierbei bevorzugt derart weitergebildet, dass der Mengendetektor einen Wandler zum Umwandeln der Bewegung des angetriebenen Bauteils des Mengendetektors in ein elektrisches Ausgangssignal aufweist. Die Wandlung in ein elektrisches Ausgangssignal kann hierbei in besonders einfacher Weise dadurch erfolgen, dass der Wandler von einem elektrischen Generator gebildet ist. Das von der Durchflussmenge von der ersten Komponente abhängige elektrische Ausgangssignal des Mengendetektors wird hierbei zur Ansteuerung der Dosiereinrichtung herangezogen.

Der Mengendetektor kann aber auch unmittelbar als elektrischer Detektor ausgebildet sein, wobei der Mengendetektor hierbei bevorzugt einen Dopplerdurchfluss-Sensor, einen kapazitiven oder induktiven Massendurchfluss-Sensor, ein Hitzdrahtanemometer, einen Impedanzsensor und/oder einen Differenzdrucksensor umfasst und ein elektrisches Ausgangssignal aufweist. Das elektrische Ausgangssignal ist hierbei wiederum der Dosiereinrichtung entweder unmittelbar oder über eine Steuerschaltung zugeführt.

Bei der mechanischen Ausbildung des Mengendetektors ist, wie bereits erwähnt, bevorzugt ein vom Fluss der ersten Komponente mechanisch angetriebener Bauteil vorgesehen. Eine bevorzugte Weiterbildung sieht in diesem Zusammenhang vor, dass der Mengendetektor einen Zylinder mit einer Einströmöffnung und einer Ausströmöffnung und einen verschieblich im Zylinder geführten Kolben aufweist, wobei der Kolben zwei Kanalpaare mit abwechselnd jeweils einen Zylinderraum mit der Ein- bzw. Ausströmöffnung verbindenden Kanälen aufweist. Das Durchströmen der ersten Komponente durch den Mengendetektor verursacht hierbei aufgrund der abwechselnd jeweils einen Zylinderraum mit der Ein- bzw. Ausströmöffnung verbindenden Kanäle ein Hin- und Herbewegen des Kolbens, wobei die Geschwindigkeit bzw. die Anzahl der Hin- und Herbewegungen einen unmittelbaren Rückschluss auf die Durchflussmenge erlaubt.

Eine konstruktiv besonders einfache Ausbildung gelingt hierbei dadurch, dass zum abwechselnden Öffnen und Schließen der Kanäle Ventilplatten vorgesehen sind, die durch Relativverschiebung die Kanäle wahlweise abdecken oder freigeben. Alternativ zum Abdecken oder Freigeben der Kanäle durch Ventilplatten kann vorgesehen sein, dass der Kolben zwischen einer ersten und einer zweiten Drehlage drehbar im Zylinder geführt ist, wobei in Abhängigkeit von der Drehlage die Kanäle des einen oder des anderen Kanalpaares in einer mit der Ein- bzw. Ausströmöffnung fluchtenden Position angeordnet sind.

Die oszillierende Bewegung des Kolbens kann hier dadurch begünstigt werden, dass an der Ventilplatte oder am Kolben wenigstens ein in einer Federführungskulisse geführtes Federelement angreift, wobei die Federführungskulisse zur Verschiebebahn des Kolbens geneigt verläuft, sodass das Federelement in Abhängigkeit vom Verschiebeweg in einer Richtung quer zur Verschiebebahn vorgespannt wird, und dass die Ventilplatte bzw. der Kolben mit wenigstens einem Führungsstift versehen ist, welcher in eine umlaufende Führungskulisse eingreift, die nach Überschreiten eines definierten Verschiebeweges des Kolbens eine Verschiebung der Ventilplatte bzw. eine Verdrehung des Kolbens bewirkt. Bevorzugt ist hierbei vorgesehen, dass die Federführungskulisse relativ zur Führungskulisse der Ventilplatte bzw. des Kolbens geneigt verläuft. Das Federelement wird hierbei bei einer Verschiebung des Kolbens in die eine Richtung zunächst kontinuierlich vorgespannt und bei Erreichen einer definierten Endposition der Angriffspunkt des Federelements aufgrund der Kulissenführung derart verschoben, dass eine Federkraft freigegeben wird, die ein schnelles und sicheres Schließen der bisher geöffneten Kanäle und ein Öffnen der bisher verschlossenen Kanäle verursacht, wodurch eine plötzliche Bewegungsumkehr des Kolbens veranlasst wird.

Eine andere mechanische Ausbildung des Mengendetektors sieht vor, dass der Durchlaufkanal über wenigstens einen Teil seiner Länge von einem gekrümmten Quetschschlauch gebildet ist und der Mengendetektor wenigstens zwei rollende Quetschräder aufweist, die abwechselnd mit dem Quetschschlauch zusammenwirken, wobei die Quetschräder an einem gemeinsamen, um eine zentrale Achse drehbaren Gerüst gelagert sind und über zu den Quetschrädern koaxiale Zahnräder und über fliegende Zahnräder mit einem zentralen drehfesten Zahnrad gekoppelt sind.

Die genaue Funktionsweise der mit dem Quetschschlauch zusammenwirkenden Quetschräder wird in der Folge anhand eines Ausführungsbeispieles näher erläutert werden.

Insgesamt wird mit der erfindungsgemäßen Einrichtung ein Aufsatz bzw. "Add-on"-System für herkömmliche Aerosoldosen bzw. Pistolen zur Verfügung gestellt. Die Einrichtung kann beispielsweise mit einer herkömmlichen Dose verbunden werden, in welcher sich eine Komponente für einen Ein-Komponenten-Schaum befindet. Dabei kann entweder lediglich ein Ein-Komponenten-Schaum ausgebracht werden, oder es kann durch gesondertes zusätzliches Ausbringen einer zweiten Komponente ein Zwei-Komponenten-Schaum hergestellt werden. Die zweite Komponente kann hierbei je nach Bedarf zugemischt werden, sodass wahlweise ein Ein-Komponenten-Produkt oder ein Zwei-Komponenten-Produkt zur Verfügung steht. Dadurch, dass die erfindungsgemäße Einrichtung an eine herkömmliche Ein-Komponenten-Aerosoldose angeschlossen werden kann, können auch billige Ein-Komponenten-Produkte zur Erzeugung eines Zwei-Komponenten-Produktes herangezogen werden. Außerdem bietet die erfindungsgemäße Einrichtung den Vorteil, dass die beiden Komponenten getrennt ausgebracht werden können, sodass eine in den jeweiligen Vorratsbehältern verbleibende Restmenge für weitere Anwendungen aufgehoben werden kann.

Um eine besonders einfache Kopplung mit einer herkömmlichen Aerosoldose zu erreichen, ist die Ausbildung hierbei derart weitergebildet, dass das Eingangsventil als Anschlussstück für ein Betätigungsventil der Kartusche bzw. Dose ausgebildet ist.

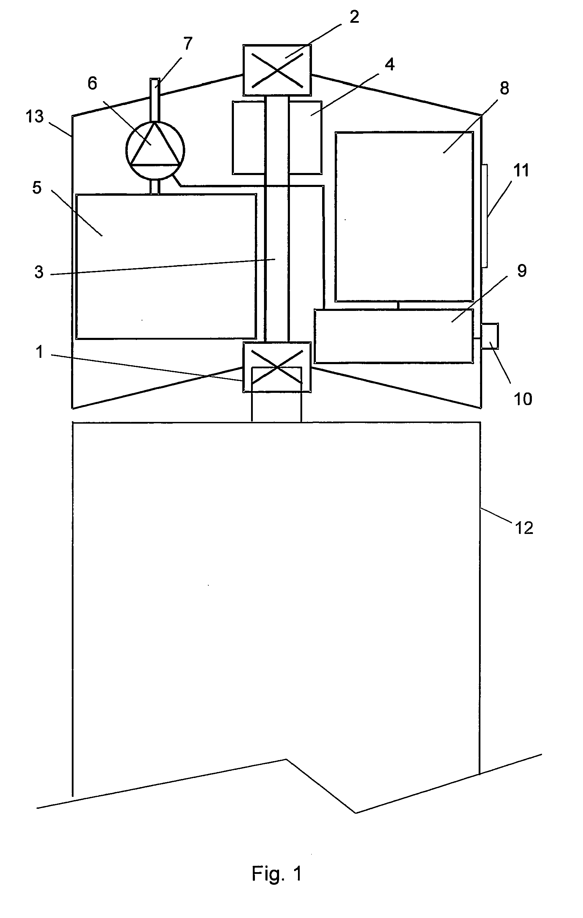

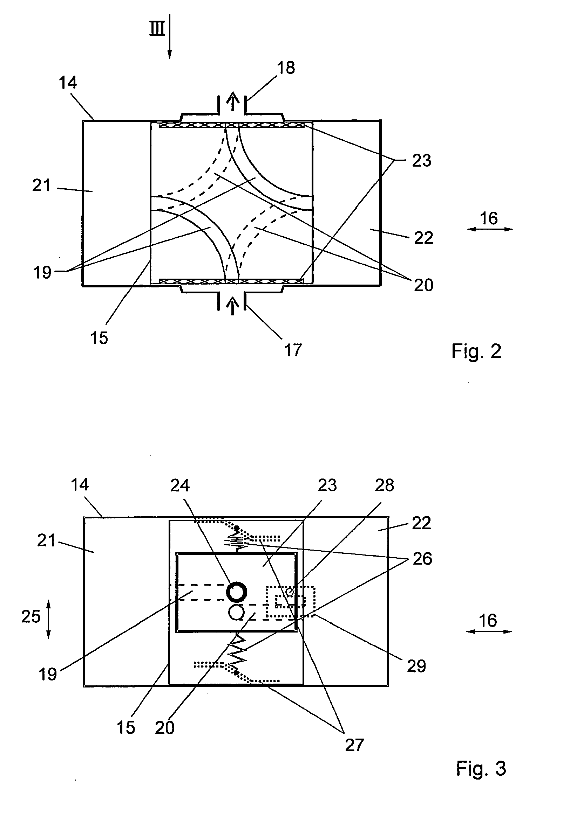

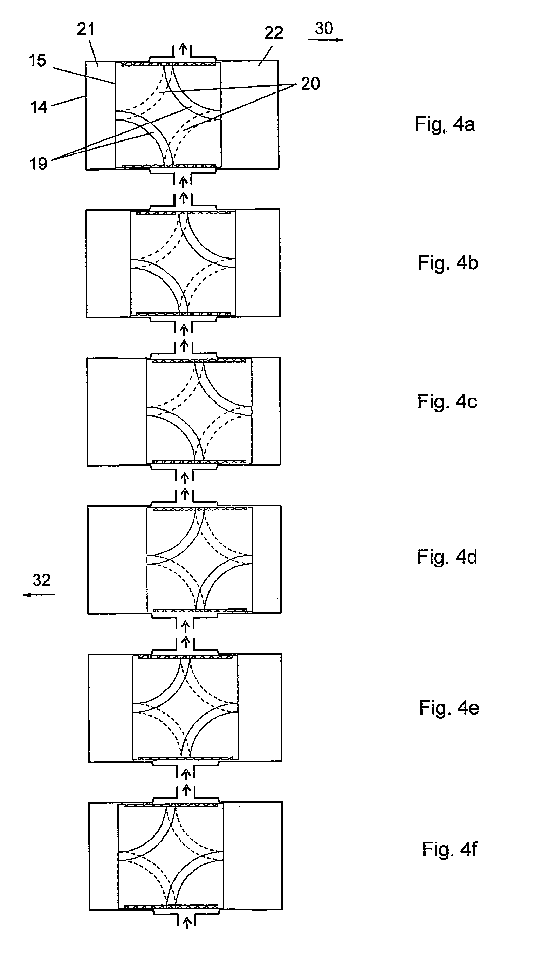

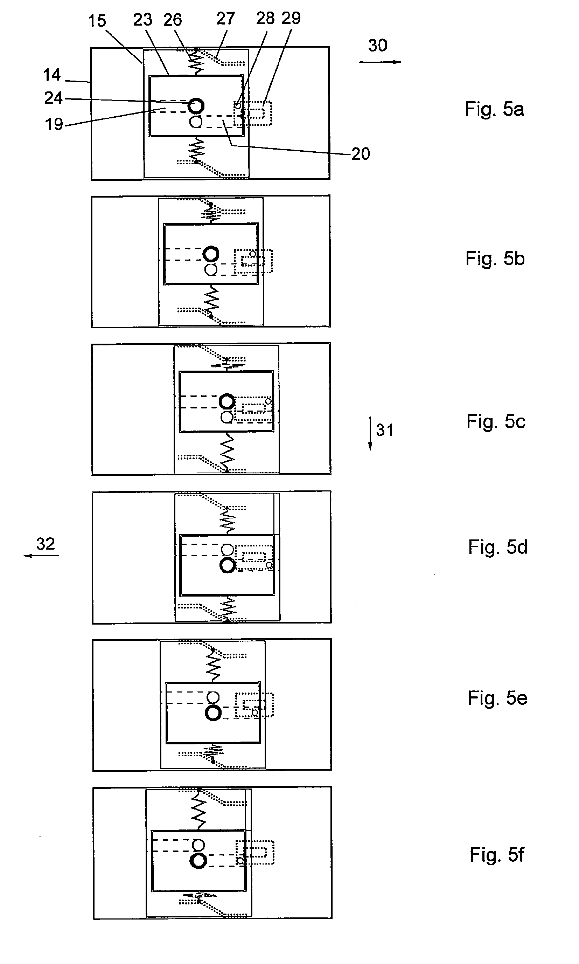

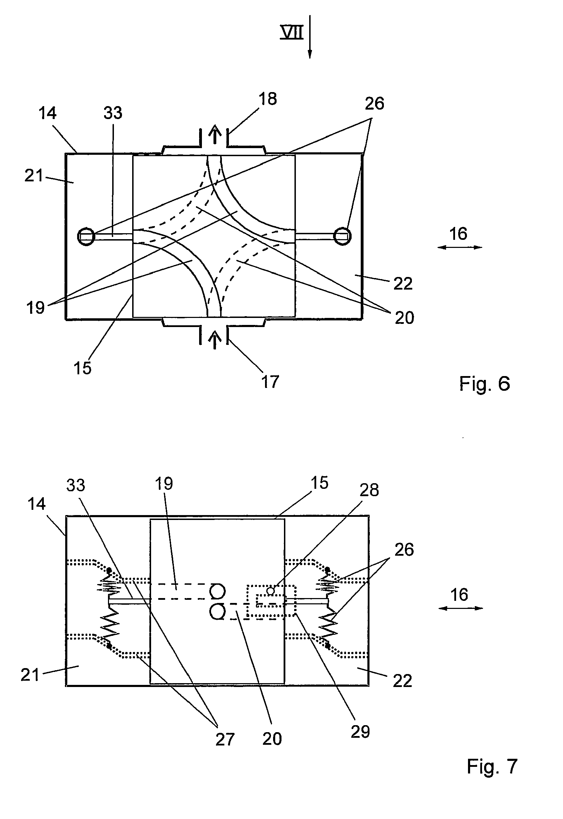

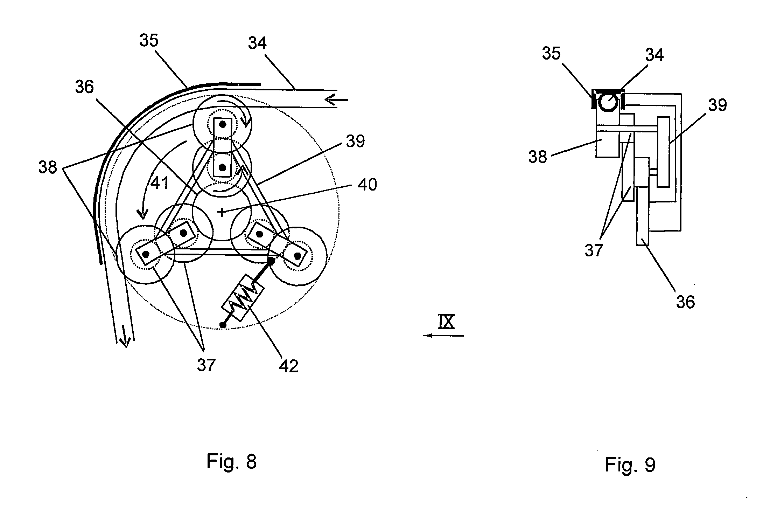

Die Erfindung wird nachfolgend anhand eines in der Zeichnung schematisch dargestellten Ausführungsbeispiels näher erläutert. In dieser zeigen Fig. 1 eine Querschnittsansicht der erfindungsgemäßen Einrichtung, Fig. 2 einen Mengendetektor im Querschnitt, Fig. 3 eine Ansicht gemäß dem Pfeil III der Fig. 2, die Figuren 4a bis 4f eine Bewegungsfolge des Kolbens in einem Mengendetektor gemäß Fig. 3, die Figuren 5a bis 5f eine Bewegungsfolge in einer Ansicht gemäß Fig. 4, Fig. 6 eine abgewandelte Ausbildung des Mengendetektors im Querschnitt, Fig. 7 eine Ansicht gemäß dem Pfeil VII der Fig. 6, Fig. 8 eine weitere abgewandelte Ausbildung des Mengendetektors, und Fig. 9 eine Ansicht gemäß dem Pfeil IX der Fig. 8.

In Fig. 1 ist eine Aerosoldose 12 dargestellt, in welcher eine erste Komponente unter Druck vorrätig ist. Die Aerosoldose 12 weist ein Betätigungsventil auf, auf welches das Eingangsventil 1 der erfindungsgemäßen Vorrichtung 13 aufgesetzt ist. Das Eingangsventil 1 ist mit einem Durchlaufkanal 3 verbunden, der in eine Ausströmöffnung 2 mündet. Bei geöffneter Ausströmöffnung 2 kann die in der Aerosoldose 12 vorrätig gehaltene erste Komponente aufgrund des in der Dose vorherrschenden Überdruckes ausgebracht werden. Die durch den Durchlaufkanal 3 fließende Menge der ersten Komponente wird hierbei von einem Mengendetektor 4 gemessen. Die Messwerte des Mengendetektors 4 sind einer Kontroll- und Regelelektronik 9 zugeführt, an welcher eine Stromversorgung 8 angeschlossen ist. Es ist weiters eine Pumpe 6 vorgesehen, die von der Kontroll- und Regelelektronik 9 angesteuert wird. Die Pumpe 6 bildet hierbei die Dosiereinrichtung für die in einer Vorratskammer 5 bereitgehaltene zweite Komponente. Die Pumpe 6 sorgt für das dosierte Ausbringen der zweiten Komponente über eine Ausströmöffnung 7. Die Kontroll- und Regelungselektronik 9 sorgt dafür, dass die Dosierung der zweiten Komponente in Abhängigkeit von der gemessenen Menge der ersten Komponente vorgenommen wird. In Fig. 1 sind weiters Ein- und Ausschaltknöpfe 10 für die Kontroll- und Regelelektronik 9 sowie ein Informationsdisplay bzw. Signalleuchten 11 dargestellt.

Der Mengendetektor 4 kann, wie bereits erwähnt, als mechanisch arbeitender oder elektrischer Detektor ausgebildet sein. Eine mechanische Ausbildung ist in Fig. 2 und 3 dargestellt.

Der Mengendetektor ist hierbei von einem Zylinder 14 gebildet, in welchem ein Kolben 15 gemäß dem Doppelpfeil 16 hin und her verschieblich gelagert ist. Der Zylinder 14 weist eine Einströmöffnung 17 und eine Ausströmöffnung 18 auf. Der Kolben 15 weist zwei Kanalpaare 19, 20 auf, wobei jeweils ein Kanal des jeweiligen Kanalpaares die Einströmöffnung 17 mit einem der beiden Zylinderräume 21, 22 und der andere Kanal den anderen der beiden Zylinderräume 21, 22 mit der Ausströmöffnung 18 verbindet.

Wie insbesondere in Fig. 3 ersichtlich ist, sind Ventilplatten 23 vorgesehen, welche jeweils die der Einströmöffnung 17 bzw. Ausströmöffnung 18 zugewandten Öffnungen der Kanäle 19, 20 freigeben oder schließen können. Die Ventilplatten 23 weisen hierbei eine Ventilplattenöffnung 24 auf, die durch Verschieben der Ventilplatte 23 gemäß dem Doppelpfeil 25 entweder mit dem Ausgang des Kanals 19 oder dem Ausgang des Kanals 20 in Deckung gebracht werden kann. An der Einströmöffnung 17 und an der Ausströmöffnung 18 ist jeweils eine Ventilplatte 23 angeordnet, wobei die Ventilplatten 23 synchron derart bewegt werden, dass die beiden Kanäle 19 oder die beiden Kanäle 20 geöffnet und die jeweils anderen Kanäle geschlossen sind. Zur Steuerung der Bewegung der Ventilplatten 23 greifen an diesen jeweils Federelemente 26 an, die an ihrem der Ventilplatte 23 abgewandten Ende in einer Federführungskulisse 27 geführt sind. Die Federführungskulisse 27 verläuft hierbei geneigt zur Verschieberichtung 16 des Kolbens 15. Dies bewirkt, dass bei einer Verschiebung des Kolbens 15 in Richtung des Doppelpfeils 16 das eine Federelement 26 komprimiert und das andere Federelement 26 expandiert wird, wodurch eine Vorspannkraft in einer Richtung quer zur jeweiligen Verschieberichtung 16 auf die Ventilplatte 23 ausgeübt wird. Die Ventilplatte 23 weist nun einen Führungsstift 28 auf, der in einer stationären umlaufenden Führungskulisse 29 geführt ist, die derart ausgebildet ist, dass die Ventilplatte 23 beim Verschieben des Kolbens 15 gemäß dem Doppelpfeil 16 in der gleichen Richtung mitgeführt wird und bei Erreichen einer Endposition der Kolbenbewegung eine Verschiebung der Ventilplatte 23 in Richtung des Doppelpfeils 25 vollzogen wird.

Der genaue Bewegungsablauf ist in den Figuren 4a bis 4f und 5a bis 5f dargestellt. Dabei entsprechen die Figuren 4a bis 4f einer Ansicht gemäß der Fig. 2 und die Figuren 5a bis 5f einer Ansicht gemäß Fig. 3. In Fig. 4a ist die linke Endposition des Kolbens 15 dargestellt. Die Ventilplatten 23 sind derart angeordnet, dass die Kanäle 19 geöffnet sind. Dadurch kann die erste Komponente über die Einströmöffnung 17 und den unteren Kanal 19 in den linken Zylinderraum 21 strömen, wodurch in diesem Zylinderraum 21 ein Überdruck entsteht, der eine Verschiebung des Kolbens 15 in Richtung des Pfeils 30 bewirkt. Diese Verschiebung wiederum bewirkt ein Ausströmen der ersten Komponente aus dem rechten Zylinderraum 22 über den oberen Kanal 19 und die Ausströmöffnung 18. Die Figuren 4b und 4c zeigen den Kolben 15 in verschiedenen Positionen während der Verschiebung in Richtung des Pfeils 30. Dabei ergibt sich aus den Figuren 5a bis 5c, dass während dieser Verschiebebewegung die Federelemente 26, die in den geneigt zur Verschiebebewegung verlaufenden Federführungskulissen 27 geführt sind, vorgespannt werden. Die Ventilplatten 23 werden hierbei über den Führungsstift 28 in einem parallel zur Verschiebebewegung des Kolbens 15 verlaufenden Abschnitt der Führungskulisse 29 geführt, bis die in Fig. 5c dargestellte Lage des Kolbens 15 erreicht ist. In dieser Lage erreicht der Führungsstift 28 einen quer zur Verschieberichtung des Kolbens 15 verlaufenden Abschnitt der Führungskulisse 29, sodass sich aufgrund der an der Ventilplatte 23 angreifenden Federkräfte eine Verschiebung der Ventilplatte 23 in Richtung des Pfeils 31 ergibt. Die verschobene Lage der Ventilplatte 23 ist in Fig. 5d dargestellt. In dieser verschobenen Lage fluchtet die Ventilplattenöffnung 24 der Ventilplatte 23 nun nicht mehr mit dem Ausgang der Kanäle 19, sondern mit dem Ausgang der Kanäle 20, wodurch sich eine Bewegungsumkehr des Kolbens 15 ergibt. Über den unteren Kanal 20 strömt die erste Komponente nämlich von der Einströmöffnung 17 in den rechten Zylinderraum 22, was aufgrund des in diesem Zylinderraum entstehenden Überdrucks eine Verschiebung des Kolbens 15 in Richtung des Pfeils 32 ergibt. Dabei fließt die zweite Komponente von dem linken Zylinderraum 21 über den oberen Kanal 20 und die Ausströmöffnung 18 aus. Diese Verschiebung des Kolbens 15 in Richtung des Pfeils 32 ist in den Figuren 4d bis 4f dargestellt. In der Ansicht gemäß den Figuren 5d bis 5f ist ersichtlich, dass während dieser Verschiebebewegung die Federelemente 26 wiederum vorgespannt werden, bis der Führungsstift 28 wiederum einen quer zur Verschiebebahn des Kolbens 15 verlaufenden Bereich der Führungskulisse 29 erreicht, wodurch sich die Ventilplatten 23 aus der in Fig. 5f dargestellten Position in die in Fig. 5a dargestellte Position verschieben kann, womit der in der Figuren 4a bis 4f bzw. 5a bis 5f dargestellte Bewegungsablauf wiederholt werden kann. Solange eine Druckdifferenz zwischen der Einströmöffnung 17 und der Ausströmöffnung 18 existiert, ergibt sich also eine oszillierende Bewegung des Kolbens 15.

In Fig. 6 ist eine abgewandelte Ausbildung des Mengendetektors 4 dargestellt, bei welcher im Unterschied zu der Ausbildung gemäß den Figuren 2 bis 5 das abwechselnde Öffnen und Schließen der Kanäle 19 und 20 nicht durch Verschieben von Ventilplatten geschieht, sondern durch Verdrehen des Kolbens 14 während der Verschiebebewegung des Kolbens 15 in Richtung des Doppelpfeils 16. Je nach Drehlage werden die Ein- bzw. Ausgänge der Kanäle 19 oder 20 in Deckung mit der Einströmöffnung 17 bzw. Ausströmöffnung 18 des Zylinders 14 gebracht, wie dies aus der Darstellung gemäß Fig. 7 ersichtlich ist. Die Änderung der Drehlage des Kolbens 15 erfolgt wiederum bei Erreichen der Endposition der Verschiebebewegung des Kolbens 15, wobei wiederum Federelemente 26 vorgesehen sind, die an einer außerhalb der Drehachse des Kolbens 15 an diesem angreifenden Stange 33 angreifen. Die Federelemente 26 sind wiederum in Federführungskulissen 27 geführt, sodass sich bei einer Verschiebung des Kolbens 15 entsprechend dem Doppelpfeil 16 eine Vorspannung der Federelemente 26 ergibt, die ein Drehmoment auf den Kolben 15 ausübt, sodass sich der Kolben 15 um einen definiert Winkel drehen kann, sobald der mit dem Kolben 15 verbundene Führungsstift 28 in einen, eine derartige Verdrehung zulassenden Bereich der Führungskulisse 29 gelangt. Es ergibt sich ein ähnlicher Bewegungsablauf, wie im Zusammenhang mit den Figuren 4a bis 4f und 5a bis 5f beschrieben, wobei anders als bei der in diesen Figuren beschriebenen Ausführungsform nicht die Ventilplatten 23 bewegt werden, sondern der Kolben 15 bei Erreichen der Endlage der Verschiebebewegung um einen definierten Winkel verdreht wird, um die Kanäle 19 und 20 abwechselnd zu öffnen und zu schließen.

Eine weitere abgewandelte Ausbildung des Mengendetektors ist in den Figuren 8 und 9 dargestellt. Der Durchlaufkanal der erfindungsgemäßen Einrichtung ist hierbei von einem Quetschschlauch 34 gebildet, der an einer gekrümmten Quetschblende 35 geführt ist. Es ist ein zentrales, feststehendes Zahnrad 36 vorgesehen, mit welchem drei fliegende Zahnräder 37 in Eingriff stehen. Diese wiederum stehen mit den Anquetschrädern 38 in Eingriff, die mit dem gekrümmten Quetschschlauch 34 zusammenwirken. Die Achsen der fliegenden Zahnräder 37 und der Anquetschräder 38 sind an einem gemeinsamen Gerüst 39 festgelegt, welches um die zentrale Achse 40 entsprechend dem Pfeil 41 rotierbar ist. Der Antrieb für die Rotationsbewegung ergibt sich dadurch, dass das durch den Quetschschlauch 34 fließende Medium die Quetschräder 38 in Fließrichtung mitnehmen, wobei die Quetschräder 38 an dem Quetschschlauch 34 abrollen. Sobald eines der Quetschräder 38 entlang des gekrümmten Bereiches des Quetschschlauches 34 bis zum Ende weiter bewegt wurde, gelangt das in Drehrichtung 41 nächste Quetschrad 38 an den Quetschschlauch 34, wodurch sich eine kontinuierliche Rotationsbewegung des Gerüstes 39 ergibt. Ein anspannbarer Federschieber ist mit 42 bezeichnet. Dieser wird während der Gerüstbewegung angespannt und kurz bevor ein Rad den Quetschschlauch verlässt, entriegelt. Dabei schiebt die Feder das Gerüst 39 in Drehrichtung 41 weiter, womit der Anfangkontaktwiderstand zwischen dem Quetschschlauch und dem nächsten Rad leichter überwunden wird. Die Rotationsbewegung des Gerüstes 39 ist abhängig von der Durchflussmenge im Quetschschlauch 34, sodass die Umdrehungszahl in einem vorbestimmten Verhältnis zur Durchflussmenge steht.

In der Seitenansicht gemäß Fig. 9 ist ersichtlich, wie die einzelnen Zahnräder miteinander in Eingriff stehen.

## Patentansprüche

1. Einrichtung zum dosierten Ausbringen von zwei Komponenten zur Verbindung mit einer Kartusche bzw. Dose, in welcher wenigstens eine Komponente unter Druck vorrätig ist, **dadurch gekennzeichnet, dass** wenigstens ein Eingangsventil (1) und eine Ausströmöffnung (2) mit einem Durchlaufkanal (3) für die unter Druck bereitgestellte erste Komponente und eine weitere Ausströmöffnung (7) für die zweite Komponente vorgesehen sind und dass ein Mengendetektor (4) für die im Durchlaufkanal (3) fließende erste Komponente und eine Dosiereinrichtung für die Dosierung der zweiten Komponente angeordnet sind, sodass die Dosierung der zweiten Komponenten in Abhängigkeit von der gemessenen Menge der ersten Komponente vorgenommen wird.

2. Einrichtung nach Anspruch 1, **dadurch gekennzeichnet, dass** die Einrichtung eine Vorratskammer (5) für die zweite Komponente umfasst, die bevorzugt über eine Pumpe (6) mit der weiteren Ausströmöffnung (7) verbunden ist.

3. Einrichtung nach Anspruch 1, **dadurch gekennzeichnet, dass** ein weiteres Eingangsventil zum Zuführen der zweiten Komponente aus einer unter Druck stehenden Vorratsdose vorgesehen ist.

4. Einrichtung nach Anspruch 1, 2 oder 3, **dadurch gekennzeichnet, dass** ein Mischkanal vorgesehen ist, in welchen die Ausströmöffnungen oder an die Ausströmöffnungen angeschlossene Leitungen münden.

5. Einrichtung nach einem der Ansprüche 1 bis 4, **dadurch gekennzeichnet, dass** eine Regelungseinrichtung (9) zur Regelung des Mischungsverhältnisses der beiden Komponenten vorgesehen ist.

6. Einrichtung nach einem der Ansprüche 1 bis 5, **dadurch gekennzeichnet, dass** der Mengendetektor (4) einen vom Fluss der ersten Komponente mechanisch angetriebenen Bauteil (15, 38) aufweist.

7. Einrichtung nach Anspruch 6, **dadurch gekennzeichnet, dass** der angetriebene Bauteil (15, 38) des Mengendetektors (4) und die Dosiereinrichtung mechanisch miteinander gekoppelt sind.

8. Einrichtung nach Anspruch 6, **dadurch gekennzeichnet, dass** der Mengendetektor (4) einen Wandler zum Umwandeln der Bewegung des angetriebenen Bauteils des Mengendetektors in ein elektrisches Ausgangssignal aufweist.

9. Einrichtung nach Anspruch 8, **dadurch gekennzeichnet, dass** der Wandler von einem elektrischen Generator gebildet ist.

10. Einrichtung nach einem der Ansprüche 1 bis 9, **dadurch gekennzeichnet, dass** der Mengendetektor (4) einen Dopplerdurchfluss-Sensor, einen kapazitiven oder induktiven Massendurchfluss-Sensor, ein Hitzdrahtanemometer, einen Impedanzsensor und/oder einen Differenzdrucksensor umfasst und ein elektrisches Ausgangssignal aufweist.

11. Einrichtung nach einem der Ansprüche 8 bis 10, **dadurch gekennzeichnet, dass** das elektrische Ausgangssignal der Dosiereinrichtung zugeführt ist.

12. Einrichtung nach einem der Ansprüche 1 bis 11, **dadurch gekennzeichnet, dass** die Dosiereinrichtung von einer Pumpe (6) gebildet ist.

13. Einrichtung nach einem der Ansprüche 1 bis 12, **dadurch gekennzeichnet, dass** der Mengendetektor (4) einen Zylinder (14) mit einer Einströmöffnung (17) und einer Ausströmöffnung (18) und einen verschieblich im Zylinder (14) geführten Kolben (15) aufweist, wobei der Kolben (15) zwei Kanalpaare (19, 20) mit abwechselnd jeweils einen Zylinderraum (21, 22) mit der Ein- bzw. Ausströmöffnung (17, 18) verbindenden Kanälen aufweist.

14. Einrichtung nach Anspruch 13, **dadurch gekennzeichnet, dass** zum abwechselnden Öffnen und Schließen der Kanäle (19, 20) Ventilplatten (23) vorgesehen sind, die durch Relativverschiebung die Kanäle (19, 20) wahlweise abdecken oder freigeben.

15. Einrichtung nach Anspruch 13, **dadurch gekennzeichnet, dass** der Kolben (15) zwischen einer ersten und einer zweiten Drehlage drehbar im Zylinder (14) geführt ist, wobei in Abhängigkeit von der Drehlage die Kanäle (19, 20) des einen oder des anderen Kanalpaares in einer mit der Ein- bzw. Ausströmöffnung (17, 18) fluchtenden Position angeordnet sind.

16. Einrichtung nach Anspruch 14 oder 15, **dadurch gekennzeichnet, dass** an der Ventilplatte (23) oder am Kolben (15) wenigstens ein in einer Federführungskulisse (27) geführtes Federelement (26) angreift, wobei die Federführungskulisse (27) zur Verschiebebahn des Kolbens (15) geneigt verläuft, sodass das Federelement (26) in Abhängigkeit vom Verschiebeweg in einer Richtung quer zur Verschiebebahn vorgespannt wird, und dass die Ventilplatte (23) bzw. der Kolben (15) mit wenigstens einem Führungsstift (28) versehen ist, welcher in eine umlaufende Führungskulisse (29) eingreift, die nach Überschreiten eines definierten Verschiebeweges des Kolbens (15) eine Verschiebung der Ventilplatte (23) bzw. eine Verdrehung des Kolbens (15) freigibt.

17. Einrichtung nach Anspruch 16, **dadurch gekennzeichnet, dass** die Federführungskulisse (27) relativ zur Führungskulisse (29) der Ventilplatte (23) bzw. des Kolbens (15) geneigt verläuft.

18. Einrichtung nach einem der Ansprüche 1 bis 17, **dadurch gekennzeichnet, dass** der Durchlaufkanal über wenigstens einen Teil seiner Länge von einem gekrümmten Quetschschlauch (34) gebildet ist und der Mengendetektor wenigstens zwei rollende Quetschräder (38) aufweist, die abwechselnd mit dem Quetschschlauch (34) zusammenwirken, wobei die Quetschräder (38) an einem gemeinsamen, um eine zentrale Achse (41) drehbaren Gerüst (39) gelagert sind und über zu den Quetschrädern (38) koaxiale Zahnräder und über fliegende Zahnräder (37) mit einem zentralen drehfesten Zahnrad (36) gekoppelt sind.

19. Einrichtung nach einem der Ansprüche 1 bis 18, **dadurch gekennzeichnet, dass** das Eingangsventil (1) als Anschlussstück für ein Betätigungsventil der Kartusche bzw. Dose ausgebildet ist.
